# EUROPEAN PATENT APPLICATION

(11) **EP 4 213 063 A1**
(43) Date of publication of application: **19.07.2023**
(21) Application number: 22203939.8
(22) Date of filing: 26.10.2022
(51) Int. Cl.: G06F 40/35

(54) **TRANSCRIPTION SYSTEM WITH CONTEXTUAL AUTOMATIC SPEECH RECOGNITION**

(30) Priority: 13.01.2022 US 202263299065 P
(71) Applicant: Stenograph, L.L.C., Downers Grove, IL 60515 (US)
(72) Inventor: DUTTA, Anir, Plainfield, 60585 (US); GILL, Amritpal, Lisle, 60532 (US); PETRUSHINA, Liliya, Downers Grove, 60515-1775 (US); PETERS, Nia, Downers Grove, 60515-1775 (US)
(74) Representative: Leach, Sean Adam

(57) **Abstract**

An automated speech recognition ("ASR") system with an audio processing engine and contextual transcription engine on a computing device is provided. The audio processing engine determines audio segmentation corresponding with multiple identified speakers of audio data. The contextual transcription engine generates a text file based on the audio data in a legally-formatted transcript using one or more AI/ML models. Embodiments of the ASR system provide provides results that will comply with most of the stenographic standards for legal transcription out of the box without further setup or tuning.

## Description

### RELATED APPLICATIONS

This application claims the benefit of U.S. Provisional App. No. 63/299,065 filed January 13, 2022 for a "Transcription System with Contextual Automatic Speech Recognition," which is hereby incorporated by reference in its entirety.

### BACKGROUND

In legal proceedings, such as in a trial or deposition, court reporters are the persons that create a transcript of the proceedings, which is a textual document of the words spoken during the proceedings. Due to the legal nature of these proceedings, there are laws and regulations that govern the specific formatting of these transcripts. Court reporters must go through schooling, and obtain state licensure and/or professional certification to learn, among other things, how to create these transcripts in the proper format.

The creation of these legally-formatted transcripts are complex. For example, a court reporter may need to translate steno shorthand notes from the proceedings and/or view videos to verify spelling of names and ensure accuracy, and confirm correct formatting for a particular jurisdiction. The creation of these transcripts are also time consuming. With a deposition, for example, an attorney may have to wait a couple weeks to obtain a transcript.

Therefore, there is a need to overcome one or more of these difficulties.

### SUMMARY

According to one aspect, this disclosure provides an automated speech recognition ("ASR") system with an audio processing engine and contextual transcription engine on a computing device. The audio processing engine determines audio segmentation corresponding with multiple identified speakers of audio data. The contextual transcription engine generates a text file based on the audio data in a legally-formatted transcript using one or more Artificial intelligence / Machine learning (AI/ML) models.

According to another aspect, this disclosure provides one or more non-transitory, computer-readable storage media. The media include a plurality of instructions stored thereon that, in response to being executed, cause a computing device to: determine audio segmentation corresponding with multiple identified speakers of audio data; and generate a text file based on the audio data in a legally-formatted transcript using one or more AI/ML models.

According to a further aspect, this disclosure provides a computer-implemented method. The method includes the step of determining audio segmentation corresponding with multiple identified speakers of audio data. A text file is generated, based on the audio data, in a legally-formatted transcript using one or more AI/ML models.

### BRIEF DESCRIPTION OF THE DRAWINGS

The concepts described herein are illustrated by way of example and not by way of limitation in the accompanying figures. For simplicity and clarity of illustration, elements illustrated in the figures are not necessarily drawn to scale. Where considered appropriate, reference labels have been repeated among the figures to indicate corresponding or analogous elements.
Figure 1 is a simplified block diagram of at least one embodiment of a transcription system with contextual automatic speech recognition;
Figure 2 is a simplified block diagram of at least one embodiment of various environments of the transcription system of Figure 1;
Figure 3 is a simplified block diagram of at least one embodiment of various environments of the ASR system of Figure 1;
Figure 4 is a simplified flow diagram of a method by which the audio processing engine generates a text file with speaker ID metadata according to at least one embodiment of the ASR system of Figure 3; and
Figure 5 is a simplified flow diagram of a method by which the contextual transcription engine generates a legal-formatted transcription according to at least one embodiment of the ASR system of Figure 3.

### DETAILED DESCRIPTION OF THE DRAWINGS

While the concepts of the present disclosure are susceptible to various modifications and alternative forms, specific embodiments thereof have been shown by way of example in the drawings and will be described herein in detail. It should be understood, however, that there is no intent to limit the concepts of the present disclosure to the particular forms disclosed, but on the contrary, the intention is to cover all modifications, equivalents, and alternatives consistent with the present disclosure and the appended claims.

References in the specification to "one embodiment," "an embodiment," "an illustrative embodiment," etc., indicate that the embodiment described may include a particular feature, structure, or characteristic, but every embodiment may or may not necessarily include that particular feature, structure, or characteristic. Moreover, such phrases are notnecessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. Additionally, it should be appreciated that items included in a list in the form of "at least one A, B, and C" can mean (A); (B); (C); (A and B); (A and C); (B and C); or (A, B, and C). Similarly, items listed in the form of "at least one of A, B, or C" can mean (A); (B); (C); (A and B); (A and C); (B and C); or (A, B, and C).

The disclosed embodiments may be implemented, in some cases, in hardware, firmware, software, or any combination thereof. The disclosed embodiments may also be implemented as instructions carried by or stored on a transitory or non-transitory machine-readable (e.g., computer-readable) storage medium, which may be read and executed by one or more processors. A machine-readable storage medium may be embodied as any storage device, mechanism, or other physical structure for storing or transmitting information in a form readable by a machine (e.g., a volatile or non-volatile memory, a media disc, or other media device).

In the drawings, some structural or method features may be shown in specific arrangements and/or orderings. However, it should be appreciated that such specific arrangements and/or orderings may not be required. Rather, in some embodiments, such features may be arranged in a different manner and/or order than shown in the illustrative figures. Additionally, the inclusion of a structural or method feature in a particular figure is not meant to imply that such feature is required in all embodiments and, in some embodiments, may not be included or may be combined with other features.

In some embodiments, this disclosure addresses a number of technical problems. For example, the automated speech recognition (ASR) includes one or more artificial intelligence (AI) / machine learning (ML) models to facilitate generation of a legally-formatted transcript These AI/ML models are trained on legal transcripts to allow the automatic generation of a legally-formatted transcript from audio data. The ASR System provides speech to text transcription while preserving the speech semantics to satisfy needs of legal transcriptions out of the box. In addition to standard speech to text conversion, embodiments of the ASR system provide results that will comply with most of the stenographic standards for legal transcription. By using specially-tuned AI/ML models specific to legal transcript formatting, the ASR system is able to save substantial editing time and/or setup efforts by a court reporter compared to existing speech-to-text systems.

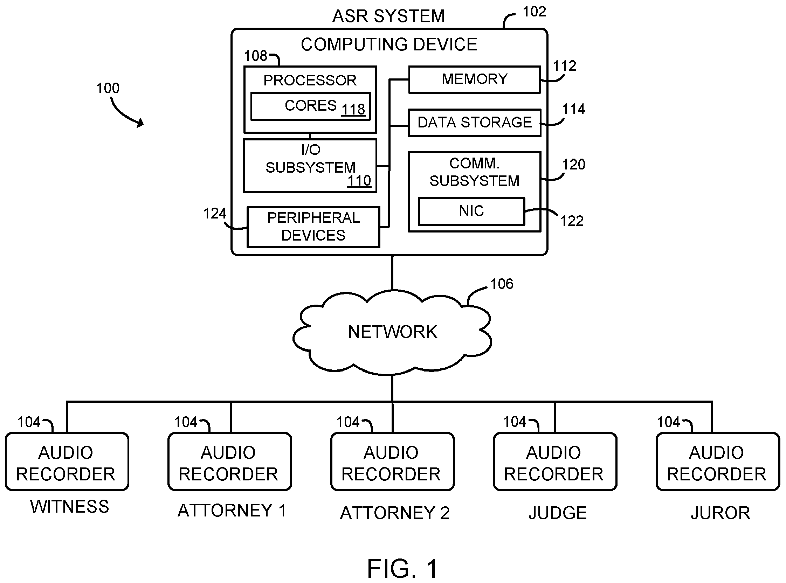

Figure 1 illustrates an embodiment of an automated speech recognition (ASR) system 100 executing on one or more computing devices 102. The ASR system 100 is configured to create a legally-formatted transcript. The term "legally-formatted transcript" is broadly intended to mean a final transcript that converts a spoken legal proceeding into a textual formatthat satisfies legal transcription requirement based on one or more regulatory guidelines or judicial rules governinghow court reporters must format legal transcripts, includingbutnotlimited to: colloquy, question & answer, annotations, word-to-number conversion, silence/noise/filler words/hesitation words/partial words transcription, etc., as shown in examples later in this disclosure. The ASR system 100 receives audio data of a legal proceeding, such as a trial or deposition, and converts that audio data into a legally-formatted transcript. Depending on the circumstances, the audio data could be an audio recording of the proceeding streamed to the ASR system 100 to create a real-time legally-formatted transcript; in some cases, the audio data could be provided to the ASR after the proceeding to create a legally-formatted transcript.

In the example shown in Figure 1, there are a plurality of audio recorders 104 to create audio data that are provided to the ASR system 102 via a network 106. In this example, there is shown a witness, attorney(s), judge, and juror that could be speakers in the proceeding to create audio data, but it should be appreciated that these persons are shown merely for purposes of example, and one or more of these persons may not be present in a proceeding; additionally, other speaker types may be provided depending on the circumstances. As shown, there is an audio recorder 104 for each of the speakers, but in some cases, a single audio recorder 104 may be a provided that captures the audio from multiple speakers in the proceeding. For example, a plurality of microphones could be provided that are connected to an audio capture device that records the audio from the proceeding. In some cases, such as when one or more speakers are in different locations, each location may include an audio recorder and the multiple sources of audio data could be synched by the ASR system 102 (or synching could be in a pre-processing system before sending to the ASR system 102).

Although a single computing device 102 is shown for the ASR system 100 in the example shown, the ASR system 100 may comprise multiple computing devices that are connected to each other. The computing device 102 may be embodied as any type of computation or computer device capable of performing the functions described herein, including, without limitation, a computer, a server, a workstation, a desktop computer, a laptop computer, a notebook computer, a tablet computer, a mobile computing device, a wearable computing device, a network appliance, a web appliance, a distributed computing system, a processor-based system, and/or a consumer electronic device. Additionally or alternatively, the computing device 102 may be embodied as a one or more compute sleds, memory sleds, or other racks, sleds, computing chassis, or other components of a physically disaggregated computing device.

As shown in FIG. 1, the computing device 102 illustratively includes a processor 108, an input/output subsystem 110, a memory 112, a data storage device 114, a communication subsystem 116, and/or other components and devices commonly found in a server or similar computing device. Of course, the computing device 102 may include other or additional components, such as those commonly found in a server computer (e.g., various input/output devices), in other embodiments. Additionally, in some embodiments, one or more of the illustrative components may be incorporated in, or otherwise form a portion of, another component. For example, the memory 112, or portions thereof, may be incorporated in the processor 108 in some embodiments.

The processor 108 may be embodied as any type of processor capable of performing the functions described herein. The processor 108 may be a multi-core processor, however, in other embodiments the processor 108 may be embodied as a single or multi-core processor(s), digital signal processor, microcontroller, or other processor or processing/controlling circuit. The illustrative processor 108 includes multiple processor cores 118, each of which is an independent, general-purpose processing unit capable of executing programmed instructions.

The memory 112 may be embodied as any type of volatile or non-volatile memory or data storage capable of performing the functions described herein. In operation, the memory 112 may store various data and software used during operation of the computing device 102 such operating systems, applications, programs, libraries, and drivers. The memory 112 is communicatively coupled to the processor 108 via the I/O subsystem 110, which may be embodied as circuitry and/or components to facilitate input/output operations with the processor 108, the memory 112, and other components of the computing device 102. For example, the I/O subsystem 110 may be embodied as, or otherwise include, memory controller hubs, input/output control hubs, sensor hubs, firmware devices, communication links (i.e., point-to-point links, bus links, wires, cables, light guides, printed circuit board traces, etc.) and/or other components and subsystems to facilitate the input/output operations. In some embodiments, the I/O subsystem 110 may form a portion of a system-on-a-chip (SoC) and be incorporated, along with the processor 108, the memory 112, and other components of the computing device 102, on a single integrated circuit chip. Similarly, the data storage device 114 may be embodied as any type of device or devices configured for short-term or long-term storage of data such as, for example, memory devices and circuits, memory cards, hard disk drives, solid-state drives, non-volatile flash memory, or other data storage devices.

The computing device 102 also include the communication subsystem 120, which may be embodied as any communication circuit, device, or collection thereof, capable of enabling communications between the computing device 102 and possibly other remote devices over the computer network 106. For example, the communication subsystem 120 may be embodied as or otherwise include a network interface controller (NIC) 122 or other network controller for sending and/or receiving network data with remote devices. The NIC 122 may be embodied as any network interface card, network adapter, host fabric interface, network coprocessor, or other component that connects the computing device 102 to the network 106. The communication subsystem 120 may be configured to use any one or more communication technology (e.g., wired or wireless communications) and associated protocols (e.g., Ethernet, InfiniBand^{®}, Bluetooth^{®}, Wi-Fi^{®}, WiMAX, 3G, 4G LTE, etc.) to affect such communication. In some embodiments, the communication subsystem 120 and/or the NIC 122 may form a portion of a SoC and be incorporated along with the processor 108 and other components of the computing device 102 on a single integrated circuit chip.

The computing device 102 may further include one or more peripheral devices 124. The peripheral devices 124 may include any number of additional input/output devices, interface devices, and/or other peripheral devices. For example, in some embodiments, the peripheral devices 124 may include a touch screen, graphics circuitry, a graphical processing unit (GPU) and/or processor graphics, an audio device, a microphone, a camera, a keyboard, a mouse, a network interface, and/or other input/output devices, interface devices, and/or peripheral devices. For example, instead of (or in addition to) audio data being sent to the ASR system 100 via the network 106, in some embodiments, the ASR system 102 may include a locally-connected or on-board audio capture device.

The network 106 may be embodied as any number of various wired and/or wireless networks. For example, the network 106 may be embodied as, or otherwise include, a wired or wireless local area network (LAN), and/or a wired or wireless wide area network (WAN). As such, the network 106 may include any number of additional devices, such as additional computers, routers, and switches, to facilitate communications among the devices of the ASR system 100.

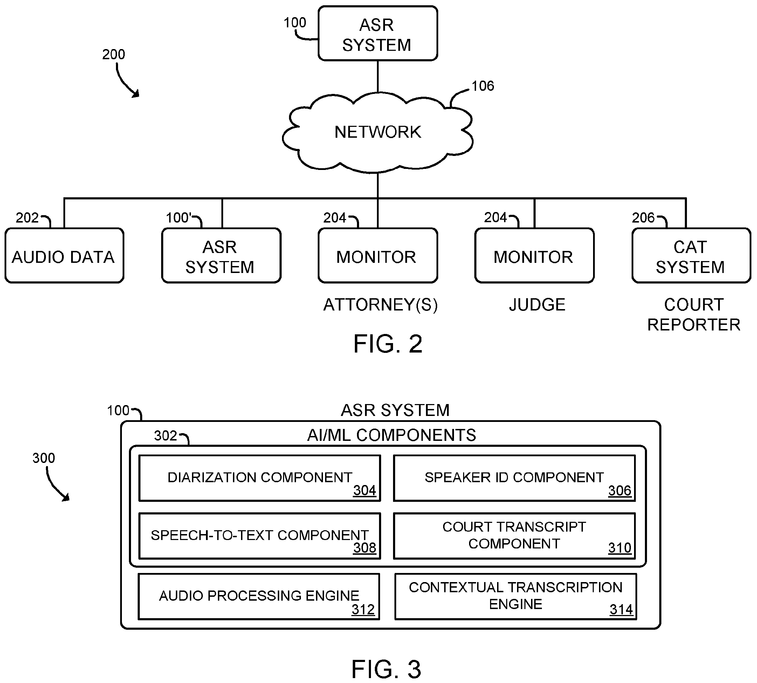

Referring now to Figure 2, the computing device 102 establishes an environment 200 with the ASR system 100 during operation to perform one or more of the actions described herein. In the embodiment shown, the ASR system 100 receives audio data 202 over the network 106; additionally, this example shows an ASR system 100' that receives the audio data with a direct connection. For example, the ASR system 100' may be connected to an audio capture device, such as with a USB connection, or include an on-board audio capture device. Whether the ASR system 100 receives the audio data 202 from a local connection or via the network 106, the ASR system 100 is configured to convert the spoken audio in the audio data 202 to a legally-formatted transcript. As mentioned herein, in some embodiments, the audio data 202 may be provided to the ASR system 100 after the proceeding to create a legally-formatted transcript; however, in other cases, the audio data 202 may be streamed to the ASR system 100 during the proceeding and the ASR system 100 may create a real-time legally-formatted transcript.

In some cases when the ASR system 100 creates a real-time legally-formatted transcript, there could be one or more real-time output streams for the transcript from the ASR system 100. For example, in the example shown, the attorney(s) and judge may include monitor software 204 to receive the real-time transcript being generated by the ASR system 100. In the example shown, the computer-aided transcription (CAT) system 206 of the court reporter also receives the real-time transcript from the ASR system 100 for editing/viewing. Consider an example of a trial in which a judge at the bench has a computer system (e.g., tablet, laptop, desktop, etc.) with a monitor, his/her court reporter also has a computer system with a monitor, a defense attorney at the defense table has a computer system with a monitor, and the plaintiff / prosecutor at the plaintiff /prosecutor table has a computer system with a monitor. Each of these computer systems of the judge, court reporter, defense attorney, and/or plaintiff / prosecutor may receive a real-time transcript stream from the ASR system 100 in which they could follow along viewing the real-time transcript on their respective monitors. As discussed herein, in some embodiments, the ASR system 100' may be local with the proceeding to create the transcript; in some embodiments, the ASR system 100 may be a cloud-based system in which the audio data 202 is sentto the ASR system 100 via the network 106, and the real-time transcript generated by the ASR system 100 is sent to the monitor software 204 and/or CAT system 206.

Figure 3 illustrates an illustrative environment 300 of the ASR system 100 during operation. The example environment 300 shown includes a plurality of AI/ML components 302, such as a diarization component 304, a speaker ID component 306, a speech-to-text component 308, and a court transcript component 310. As shown, the environment 300 also includes an audio processing engine 312 and a contextual transcription engine 314. As shown, the various components of the environment 300 may be embodied as hardware, firmware, software, or a combination thereof. As such, in some embodiments, one or more of the components of the environment 300 may be embodied as circuitry or collection of electrical devices (e.g., a diarization component circuity 304, a speaker ID component circuitry 306, a speech-to-text component circuitry 308, a court transcript component circuitry 310, an audio processing engine circuitry 312, and a contextual transcription engine circuitry 314). Additionally or alternatively, in some embodiments, those components may be embodied as hardware, firmware, or other resources of the processor 108.

In some embodiments, the AI/ML components 302 facilitate conversion of the spoken voices in the audio data 202 into a legally-formatted transcript. For example, the AI/ML components 302 may be trained with a plurality of legally-formatted transcripts and audio data corresponding to the transcripts. In some cases, for example, the AI/ML components 302 may be fed with thousands of legally-formatted transcripts and audio data corresponding to the transcripts. One or more parameters of the components may be tuned to enhance the outputof the components, such as through comparisons to validate the output of the models against legally certified transcripts corresponding to the audio data.

The diarization component 304 is configured to distinguish between different speakers in the audio data 202. For example, the diarization component 304 may identify segments within the audio data 202 corresponding to each speaker. Consider an example of a deposition in which the speakers in the audio data 202 are Attorney 1, Attorney 2 and a witness. The diarization component 304 may be configured to identify segments of the audio data 202 corresponding to each of the Attorney 1, Attorney 2, and witness. For example, the diarization component 304 may create an index with a plurality of time stamp segments in which each segment corresponds to one of the three different speakers (e.g., attorney(s) and witness) identified in the audio data 202.

The speaker ID component 306 is configured to work with the output of the diarization component 304 to assign speaker IDs to each speaker segment identified by the diarization component 304. In some embodiments, the speaker IDs may be assigned based on existing recording(s) or voice imprint captured, for example, at start of the proceeding, such as a deposition. For example, the speaker ID component 306 may identify the names, in whole or part, of the speakers. The speaker ID component 306, thus, assigns a speaker ID to each segment identified by the diarization component 304.

The speech-to-text component 308 is configured to convert the spoken words in the audio data 202 into text. In some embodiments, the speech-to-text component 308 may include one or more metadata parameters with the text, such as time stamps.

The court transcript component 310 is configured to format the text received from the speech-to-text component 308 into a legally-formatted transcript. The court transcript component 310 may be configured with a plurality of formatting models and rules to ensure the final transcript is in a legal format. By way of example, the court transcript component 310 may include core models and rules for transcription handling, number conversion, adding punctuation, and Q/A formatting.

By way of example only, the core rules for transcription handling used by the court transcript component 310 may include one or more of the following rules or conventions, which could be based on training the component 310 with a plurality of legal formatted training transcripts:

### Numbers

All numerals are written out as complete words. Hyphenation is used for numbers between twenty-one and ninety-nine only. Examples: twenty-two, nineteen ninety-five, seven thousand two hundred seventy-five, nineteen oh nine

The rules of numbers are ten and under are written as words, with the exceptions such as page, paragraph, exhibit (as shown in the number conversion word list). Over 10 numbers are expressed in digit format.

### Contractions

Annotators should transcribe contractions only when a contraction is actually produced by the speaker. Annotators should take care to transcribe exactly what the speaker says, not what they expect to hear. If a speaker uses a contraction, the word is transcribed as contracted: they're, won't, isn't, don't and so on. If the speaker uses a complete form, the annotator should transcribe what is heard: they are, is not and so on. Please note that annotators should use the nonstandard forms gonna, wanna, gotta, shoulda, woulda, coulda instead of standard orthography if this is how a speaker pronounces the words in question. Please take care to avoid the common mistakes of transposing possessive its for the contraction it's (it is); possessive your for the contraction you're (you are); and their (possessive), they're (they are) and there.

### Hyphenated words and compounds

Annotators should use hyphens in compounds where they are required: anti-nuclear protests (not anti nuclear protests). In cases where there is a choice between writing a compound word as one word, a hyphenated word, or as two words with spaces in between, transcribers should opt for one of the two versions: house-builder or house builder (but not housebuilder) (in some embodiments, there may be a prefix/suffix rule file that located in the System Files briefcase that outlines which words should have the hyphen added to compound word.)

### Acronyms and spoken letters

Acronyms that are normally transcribed as a single word but pronounced as a sequence of individual letters should be transcribed in all caps, with each individual letter surrounded by spaces:

I took my G R E's.

I'll stop in to get my U P S packages.

Similarly, individual letters that are pronounced as such should be written in capitalizations:

I got an A on the test.

How about if his name was spelled M U H R?

### Filler words and hesitation sounds

Filler words (or filled pauses) are non-lexemes (non-words) that speakers employ to indicate hesitation or to maintain control of a conversation while thinking of what to say next For examples, *ah, eh, er, uh, um.* They should not be transcribed.

### Partial words

When a speaker breaks off in the middle of the word, annotators transcribe as much of the word as can be made out. A single dash without preceding space - is used to indicate point at which word was broken off.

Yes, absolu- absolutely.

Well, I gue- I would think this is what they intended.

An interruption should be 2 dashes not a single one. Yes, absolu -- absolutely

### Silence and pause

Silence is a longer pause between speakers turns or thinking time within a speaker. Please use <sil> to annotate silence.

Pause is a short gap between continuous spoken words, use <pause> to annotate.

### Repeating words

If speaker repeats a word a few times, for example, "I I I don't have an idea.", the speaker repeats 'I' three times, transcribers should transcribe I I I but NOT a single 'I'.

### Overlapped speech

If more than one speaker talk at the same time, all intelligible speech should be transcribed.

### Noises

Please annotate and specify the noise events during the speech. For example, <paper> indicates a paper flipping noise during the talk. Insert other noise annotations as needed such as <cough> for cough noise, <music> for background music, <sing> for singing, and <noise> for a general noise without knowledge of what noise it should be.

### Foreign and unintelligible speech

Please annotate <foreign> for foreign words, and <unintelligible> for unintelligible speech

### Speakers and time stamps

Please specify the speakers and time stamps to label start/stop times of utterances. For example in a tab-delimited format:
spkr1 <Tab>185.98<Tab>196.72<Tab>Uh right the first week or second week uh before January sixteenth
Spkr2<Tab>197.83<Tab>200.03<Tab>Uh which is cheaper cause uh uh before

By way of example only, the number conversion exceptions used by the court transcript component 310 may include one or more of the following rules or conventions:

Generally acceptance rules are as follows:
• Any number spoken under ten is written out
• Any number spoken over ten is digits
• A general principle is "when in doubt spell it out"

Depending upon the way people read numbers, the reporter will transcribe verbatim in a variety of ways. For example: They may say 5.24 million - fifty two four million - five million two hundred and forty two thousand

It could then get subjective. For example, "5 thousand people" could convert to "5,000" people or it could just be "five thousand people," the same is true for 18 hundred could be 1,800 and eighteen hundred could convert to 1800. Dollars with Million, billion, trillion should stay as follows and the transcriber will make the decision to change it:
$1 million -- $1,000,000
$1 billion- $1,000,000,000
$1 trillion -- $1,00,000,000,000

Numbers in a series or a row separated by one or more spaces, a comma, dash, slash or the word "and," "or," "through," "to," or "of." is also subjective number conversion. For example, "two to four things," could be "2 to 4 things" with the exception of certain trigger words such as Page, for example "Page 2 of four," should be "Page 2 of 4."

As mentioned typically numbers 10 and Under should display as words, unless certain words would flag it to be a digit. Here is an example of words that should have the number as a digit:
"category"
"document"
"exhibit"
"exhibit no."
"pH of"
"SPF"
"box"
"pages"
"group exhibit"
"people's group"
"people's group exhibit"
"people's group exhibit number"
"defense group exhibit number"
"defense group"
"defense group exhibit"
"exhibit number"
"people's exhibits"
"people's exhibits numbers"
"people's numbers"
"people's number"
"defendant's group exhibit"
"defendant's group exhibits"
"defense group exhibits"
"defense number"
"group exhibit number"
"group exhibits"
"group exhibit numbers"
"group exhibits numbers"
"highway"
"district"
"branch"
"counts"

Dates can be subjective as well. Some will say that when a comma is after the day if the year is present, "July two 2021" it should convert to "July 2nd, 2021," with a comma after the year. However, some may say that it should convert but not add the commas, so for example "July two 2021" converts to "July 2nd, 2021" without a comma after the year.

In some embodiments, when the court transcript component 310 detects a witness is sworn to give testimony, a Q/A format is used. By way of example only, the Q/A formatting rules used by the court transcript component 310 may include one or more of the following rules or conventions:

The Q/A format follows the following headers, which are also followed by a BY [*Name of Examining Attorney*]: to identify which specific attorney is asking the questions of the witness during each type of examination. Consider an example in which Mr. Dutta is taking Direct Exam, and Mr. Gill and Ms. Peters are Cross-Examining the witness. There are specific rules of civil procedure as to the format of questions that may be asked during each type of examination. For example, you can ask leading questions on Cross-Examination, but you cannot on Direct Examination.
DIRECT EXAMINATION
BY MR. DUTTA:
Q
A
CROSS-EXAMINATION
BY MR. GILL:
Q
A
CROSS-EXAMINATION
BY MS. PETERS
Q
A
REDIRECT EXAMINATION
BY MR. DUTTA
RECROSS EXAMINATION
BY MS. PETERS:
FURTHER REDIRECT EXAMINATION
BY MR. DUTTA:
FURTHER RECROSS EXAMINATION
BY MS. PETERS:

The following are other types of exam headers that could be detected by the court transcript component 310 and inserted into the transcription based on context:
EXAMINATION UNDER OATH
ADVERSE EXAMINATION
VOIR DIRE EXAMINATION

All questions or statements directed to the witness by the identified Examining Attorney are Q.

All answers from the witness to the identified Examining Attorney are A.

The court transcript component 310 may include rules for leaving the Q/A formatting and entering into a colloquy format. For example, when an objection is made by any party in the room, it should be identified in the transcript by the speaker name. When the examining attorney addresses anyone else in the room, other than the witness, they should be identified by their speaker name. When the examining attorney makes a statement for the record, which is typically an indicator to the Reporter to enter a parenthetical as well, such as:
MR. DUTTA: Please mark this as Exhibit 1. (10 spaces indented)
(Exhibit No.1 marked for identification.) (centered)
14 Q. Are you going to answer the question I just asked?
15 A. Per my counsel's instruction, no.
16 MR. DUTTA: I'd like the record to reflect that the Witness has refused to answer
17 the question. Madam Reporter, please certify the previous question.

The court transcript component 310 may include rules for indentations. For example, colloquies are statements by the court or counsel and typed in the following manner. Speaker identification will begin on the eleventh space from the left marginal line followed by a colon. The statement will begin on the third space after the colon. The body of the colloquy will begin at the left marginal line. For example:
1 THE COURT: I am familiar with that case. I had
2 forgotten all about it. That was a surprise ruling by the
3 State Supreme Court. Based on that case, it appears that
4 I might dismiss the charge against the defendant in this
5 case.

With regard to question and answers in the transcript, one or more of the following rules may apply for the court transcript component 310:
a. "Q" and "A" designations - All "Q" designations will begin on the sixth space from the left marginal line. All "A" designations will begin at the left marginal line. A period following the "Q" and "A" designation is optional.
b. "Q" and "A" statements - All "Q" statements will begin on the eleventh space from the left marginal line. All "A" statements will begin on the TRANSCRIPT FORMAT FOR JUDICIAL PROCEEDINGS 13 sixth space from the left marginal line. Subsequent lines of each "Q" and "A" statement will begin at the left marginal line.
c. Questioning of a witness - When a witness on the stand is being questioned, the witness' response is always designated with "A." The attorney is given the "Q" designation when talking directly to the witness. When the attorney addresses other parties in the court during the "Q" and "A," the attorney designation is the attorney's name, as in the colloquy format, such as:
   13 Q. And how long have you lived there?
   14 A. Oh, I guess just before my son was born.
   15 MR. JONES: Your Honor, can you instruct the
   16 witness to answer the question.
   17 THE COURT: Will you please answer the question.
d. Cross-examination by the judge - In extensive cross examination by the judge, the "Q" and "A" designation is used, with the judge given the "Q" designation. Examination by the court is indicated in the transcript, such as:
   2 BY THE COURT:
   3 Q. Please explain why you were at the mall.
   4 A. To pick up a present for my brother.
   5 Q. What time did you arrive at the mall?

The colloquy format is used when the judge interjects a question during an attorney's examination to ask the witness a question. The witness would respond in colloquy as THE WITNESS. For example:
13 Q. And how long have you lived there?
14 MR. JONES: Your Honor, can you instruct the
16 witness to answer the question.
17 THE COURT: Will you please answer the question.
18 A I think two or three years.
19 BY MR. DUTTA:
20 Q. Let's move on.

The court transcript component 310 may include one or more rules regarding capitalization of "a.m." and "p.m." For example, the answer to "are a.m. and p.m. capitalized" depends on whether the abbreviation is being used in a sentence (lowercased) or a title (capitalized). In a title meaning a subject line or header which we don't have in transcripts, so lower case with periods.

5 p.m.

5 o'clock p.m. or 5:00 p.m

The table below summarizes capitalization rules that could be incorporated into one or more embodiments of the court transcript component 310:

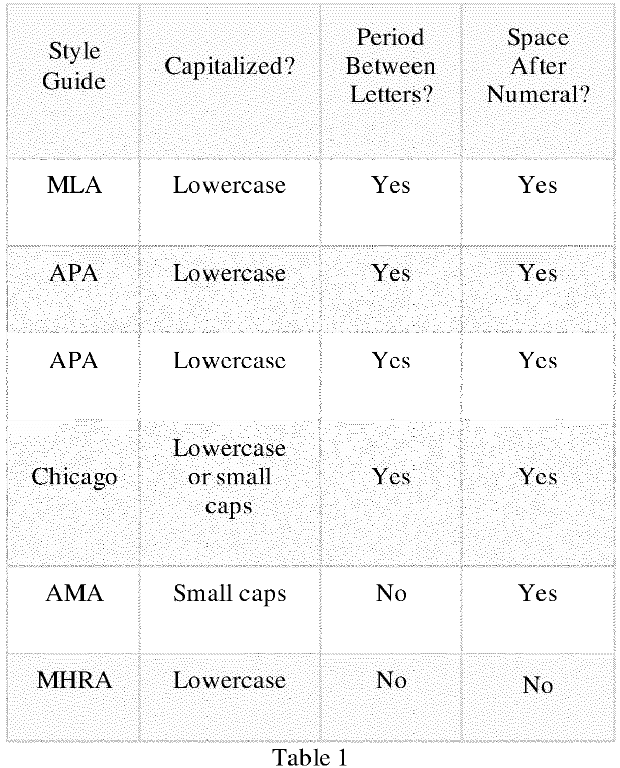

The court transcription component 310 may include rules for handling dollars that are less than 1 million. For example, the rule may be that numbers in the thousands are expressed in figures with a comma and can never be a combination of figures and words, such as ...sent 45,000... ...received 133,000 of them... ...offered 50,000 for it... Whether the number is said "fifteen hundred" or "one thousand five hundred," the comma is inserted....sent 1,500... ...received 3,400... ...offered 2,100...

In some embodiments, the court transcription component 310 may include rules for handling numbers for dates. For example, when the ordinal is added to a date when said - ...on May 5th... - it is not good grammar. It is not correct to say the month and date and add the ordinal to the date. Whether you are going to transcribe it with the ordinal depends on how "verbatim" you are going to be. When the month is not said, the ordinal, of course, is correct For example, ...on the 5th of May... ...came on the 5th... ...on May the 5th...

In some embodiments, the audio processing engine 312 is configured to convert the audio data 202 to a text file that includes metadata identifying the speakers for audio segments in the audio data 202. For example, the audio processing engine 312 may be configured to use the diarization component 304 to identify the audio segments corresponding to different speakers in the audio data 202. The speaker ID component 306 may be used by the audio processing engine 312 to assign speaker IDs to the audio segments identified by the diarization component 304, such as names of the speakers. The speech-to-text component 308, for example, may be used by the audio processing engine 312 to convert the audio data to text.

The contextual transcription engine 314 is configured to convert the text file from the audio processing engine 312 into a legally-formatted transcript. For example, the contextual transcription engine 314 may detect context of spoken words in the audio data 202 and apply one or more corresponding formatting rules. For example, the contextual transcription engine 314 may distinguish between Q/A formatting and colloquy formatting.

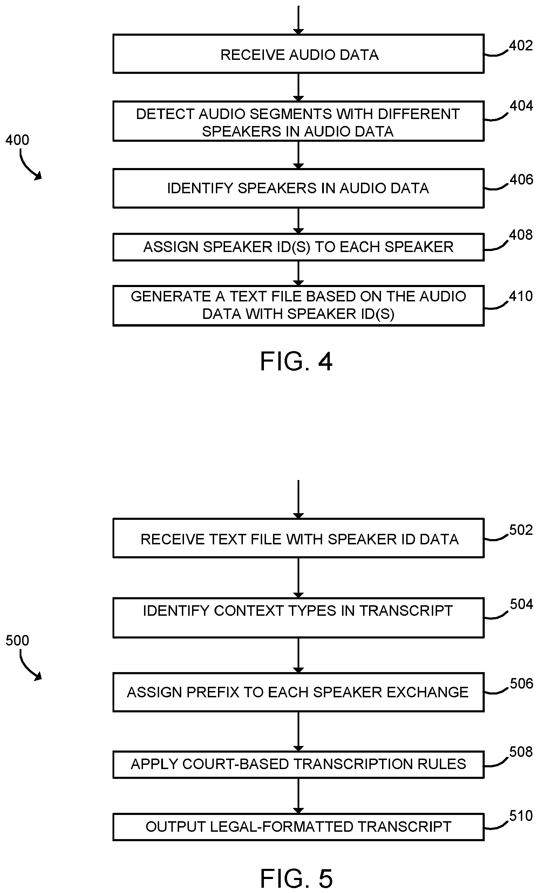

Referring now to Figure 4, in use, a computing device 102 may execute a method 400 for processing the audio data 202. It should be appreciated that, in some embodiments, the operations of the method 400 may be performed by one or more components of the environment 300 as shown in FIG. 3, such as the audio processing engine 312. The method 400 begins in block 402 in which the audio data is received, such as by the audio processing engine 312. The method 400 advances to block 404 in which different speakers in the audio data 202 are detected. The method 400 proceeds to block 406 in which speakers in the audio data 202 are identified by audio segment and these speakers are assigned speaker IDs in block 408. A text file with audio segment data identifying speakers is then generated (block 410).

Referring now to Figure 5, in use, a computing device 102 may execute a method 500 for generating a transcript that is in a legal form based on the audio data 202. It should be appreciated that, in some embodiments, the operations of the method 500 may be performed by one or more components of the environment 300 as shown in FIG. 3, such as the contextual transcription engine 412. The method 500 begins in block 502 in which the text file with the speaker ID data is received. The method 500 proceeds to blocks 504 and 506 to identify the context types and prefix for each speaker exchange in the spoken words of the text file. The method 500 advances to block 508 in which one or more court-based transcription rules are applied to the text file. The method 500 continues to block 510 in which a legally-formatted transcript is outputted.

### EXAMPLES

Illustrative examples of the technologies disclosed herein are provided below. An embodiment of the technologies may include any one or more, and any combination of, the examples described below.

Example 1 includes an automated speech recognition ("ASR") system with an audio processing engine and contextual transcription engine on a computing device. The audio processing engine determines audio segmentation corresponding with multiple identified speakers of audio data. The contextual transcription engine generates a text file based on the audio data in a legally-formatted transcript using one or more AI/ML models.

Example 2 includes the subject matter of Example 1, and wherein: the one or more AI/ML models includes a court transcript model that is trained with a plurality of audio recordings and corresponding certified legally-formatted training transcripts.

Example 3 includes the subject matter of Examples 1-2, and wherein: the court transcript model is verified by comparing a legally-formatted transcript outputted by the contextual transcription engine with a certified legally-formatted training transcript that originates from corresponding audio data.

Example 4 includes the subject matter of Examples 1-3, and wherein: the court transcript model includes one or more parameters that are adjustable based on comparing the legally-formatted transcript outputted with the certified legally-formatted training transcript that originates from corresponding audio data.

Example 5 includes the subject matter of Examples 1-4, and wherein: the court transcript model includes a plurality of transcription handling rules that are applied by the court transcript model based on a context detected in the audio data.

Example 6 includes the subject matter of Examples 1-5, and wherein: the contextual transcription engine is to establish a default context and one or more exception contexts, and wherein the contextual transcription engine is to apply one or more default formatting rules responsive to detection of the default context to generate the legally-formatted transcript.

Example 7 includes the subject matter of Examples 1-6, and wherein: the contextual transcription engine is to apply one or more exception formatting rules responsive to detection of an exception context to generate the legally-formatted transcript.

Example 8 includes the subject matter of Examples 1-7, and wherein: the exception context comprises detection of a witness being sworn in in the audio data, and responsive to detection of the witness being sworn in, applying one or more Q/A formatting rules to generate the legally-formatted transcript.

Example 9 includes the subject matter of Examples 1-8, and wherein: the exception context comprises detection of an objection being raised in the audio data, and responsive to detection of the objecting being raised, applying one or more colloquy formatting rules to generate the legally-formatted transcript.

Example 10 includes the subject matter of Examples 1-9, and wherein: the audio processing engine includes one or more AI/ML components to detect audio segments of multiple speakers in the audio data.

Example 11 includes the subject matter of Examples 1-10, and wherein: the one or more AI/ML components to detect audio segments of multiple speakers including identifying one or more of the multiple speakers in the audio data by name based on one or more of: (i) a portion of the audio data; (ii) on an existing audio recording of one or more of the multiple speakers; or (iii) a voice imprint capture of one or more of the multiple speakers.

Example 12 includes the subject matter of Examples 1-11, and wherein: the audio processing engine is to identify one or more of the multiple speakers by name and assigns a speaker identifier to at least one of the multiple speakers.

Example 13 includes the subject matter of Examples 1-12, and wherein: the contextual transcription engine is to insert a speaker name into the legally-formatted transcript with corresponding spoken words of the speaker identified by the audio processing engine.

Example 14 includes one or more non-transitory, computer-readable storage media. The media include a plurality of instructions stored thereon that, in response to being executed, cause a computing device to: determine audio segmentation corresponding with multiple identified speakers of audio data; and generate a text file based on the audio data in a legally-formatted transcript using one or more AI/ML components.

Example 15 includes the subject matter of Example 14, and wherein: the one or more AI/ML components includes a court transcript component that is trained with a plurality of audio recordings and corresponding certified legally-formatted training transcripts.

Example 16 includes the subject matter of Examples 14-15, and wherein: the court transcript component is verified by comparing a legally-formatted transcript outputted with a certified legally-formatted training transcript that originates from corresponding audio data.

Example 17 includes the subject matter of Examples 14-16, and wherein: the court transcript component includes one or more parameters that are adjustable based on comparing the legally-formatted transcript outputted with the certified legally-formatted training transcript that originates from corresponding audio data.

Example 18 includes the subject matter of Examples 14-17, and wherein: the court transcript component includes a plurality of transcription handling rules that are applied by the court transcript component based on a context detected in the audio data.

Example 19 includes the subjectmatter of Examples 14-18, and further comprising: one or more instructions to establish a default context and one or more exception contexts, and wherein to apply one or more default formatting rules responsive to detection of the default context is to generate the legally-formatted transcript.

Example 20 includes the subject matter of Examples 14-19, and further comprising: one or more instructions to apply one or more exception formatting rules responsive to detection of an exception context to generate the legally-formatted transcript.

Example 21 includes the subject matter of Examples 14-20, and wherein: the exception context comprises detection of a witness being sworn in in the audio data, and responsive to detection of the witness being sworn in, applying one or more Q/A formatting rules to generate the legally-formatted transcript.

Example 22 includes the subject matter of Examples 14-21, and wherein: the exception context comprises detection of an objection being raised in the audio data, and responsive to detection of the objecting being raised, applying one or more colloquy formatting rules to generate the legally-formatted transcript.

Example 23 includes the subject matter of Examples 14-22, and further comprising: one or more instructions to establish one or more AI/ML components to detect audio segments of multiple speakers in the audio data.

Example 24 includes the subject matter of Examples 14-23, and wherein: the one or more AI/ML components are to detect audio segments of multiple speakers including identifying one or more of the multiple speakers in the audio data by name based on one or more of: (i) a portion of the audio data; (ii) on an existing audio recording of one or more of the multiple speakers; or (iii) a voice imprint capture of one or more of the multiple speakers.

Example 25 includes the subject matter of Examples 14-24, and further comprising: one or more instructions to identify one or more of the multiple speakers by name and assigns a speaker identifier to at least one of the multiple speakers.

Example 26 includes the subject matter of Examples 14-25, and further comprising: one or more instructions to insert a speaker name into the legally-formatted transcript with corresponding spoken words of the speaker identified by the audio processing engine.

In a further example there is provided an automated speech recognition ("ASR") system, the ASR system comprising: an audio processing engine, on a computing device, to determine audio segmentation corresponding with multiple identified speakers of audio data; and a contextual transcription engine, on the computing device, to generate a text file based on the audio data in a legally-formatted transcript; a court transcript component configured to provide, for the text file, text determined from the audio data based on a model comprising:
(i) one or more parameters and being configured to output legally-formatted transcript based on the parameters and the audio data; and/or
(ii) a plurality of transcription handling rules that are applied by the court transcript component based on a context detected in the audio data.

The parameters may be adjustable and the ASR system may be configured to adjust the parameters based on comparing the legally-formatted transcript outputted with a certified legally-formatted training transcript that originates from corresponding audio data. For example, the ASR system may be configured to adjust the parameters, for example it may comprise a machine learning (ML) component for this purpose. The parameters may be selected and/or adjusted based on training data comprising a plurality of audio recordings and corresponding certified legally-formatted training transcripts. The example set out in this paragraph may further include the subject matter of any of Examples 3 to 26 as set out above.

Example 27 includes a computer-implemented method. The method includes the step of determining audio segmentation corresponding with multiple identified speakers of audio data. A text file is generated, based on the audio data, in a legally-formatted transcript using one or more AI/ML components.

Example 28 includes the subject matter of Example 27, and wherein: the one or more AI/ML components includes a court transcript component that is trained with a plurality of audio recordings and corresponding certified legally-formatted training transcripts.

Example 29 includes the subject matter of Examples 27-28, and wherein: the court transcript component is verified by comparing a legally-formatted transcript outputted with a certified legally-formatted training transcript that originates from corresponding audio data.

Example 30 includes the subject matter of Examples 27-29, and wherein: the court transcript component includes one or more parameters that are adjustable based on comparing the legally-formatted transcript outputted with the certified legally-formatted training transcript that originates from corresponding audio data.

Example 31 includes the subject matter of Examples 27-30, and wherein: the court transcript component includes a plurality of transcription handling rules that are applied by the court transcript component based on a context detected in the audio data.

Example 32 includes the subject matter of Examples 27-29, and further comprising: one or more instructions to establish a default context and one or more exception contexts, and wherein to apply one or more default formatting rules responsive to detection of the default context is to generate the legally-formatted transcript.

Example 33 includes the subject matter of Examples 27-32, and further comprising: one or more instructions to apply one or more exception formatting rules responsive to detection of an exception context to generate the legally-formatted transcript.

Example 34 includes the subject matter of Examples 27-33, and wherein: the exception context comprises detection of a witness being sworn in in the audio data, and responsive to detection of the witness being sworn in, applying one or more Q/A formatting rules to generate the legally-formatted transcript.

Example 35 includes the subject matter of Examples 27-34, and wherein: the exception context comprises detection of an objection being raised in the audio data, and responsive to detection of the objecting being raised, applying one or more colloquy formatting rules to generate the legally-formatted transcript.

Example 36 includes the subject matter of Examples 27-35, and further comprising: one or more instructions to establish one or more AI/ML components to detect audio segments of multiple speakers in the audio data.

Example 37 includes the subject matter of Examples 27-36, and wherein: the one or more AI/ML components are to detect audio segments of multiple speakers including identifying one or more of the multiple speakers in the audio data by name based on one or more of: (i) a portion of the audio data; (ii) on an existing audio recording of one or more of the multiple speakers; or (iii) a voice imprint capture of one or more of the multiple speakers.

Example 38 includes the subject matter of Examples 27-37, and further comprising: one or more instructions to identify one or more of the multiple speakers by name and assigns a speaker identifier to at least one of the multiple speakers.

Example 39 includes the subject matter of Examples 27-38, and further comprising: one or more instructions to insert a speaker name into the legally-formatted transcript with corresponding spoken words of the speaker identified by the audio processing engine.

In a further example there is provided a computer-implemented method comprising: determining audio segmentation corresponding with multiple identified speakers of audio data; and generating a text file based on the audio data in a legally-formatted transcriptbased on a model comprising one or more parameters and being configured to output legally-formatted transcript based on the parameters and the audio data. The parameters may be adjustable and the method may comprise adjusting the parameters based on comparing the legally-formatted transcript with a certified legally-formatted training transcript that originates from the audio data. For example, the ASR system may be configured to adjust the parameters according to machine learning (ML) methods. The parameters may be selected and/or adjusted based on training data comprising a plurality of audio recordings and corresponding certified legally-formatted training transcripts. The example set out in this paragraph may further include the subject matter of any of Examples 28 to 39 as set out above. An embodiment provides a computer program product configured to program a programmable processor to perform any one or more of the methods described herein.

## Claims

1. An automated speech recognition ("ASR") system, the ASR system comprising:
an audio processing engine, on a computing device, to determine audio segmentation corresponding with multiple identified speakers of audio data; and
a contextual transcription engine, on the computing device, to generate a text file based on the audio data in a legally-formatted transcript using one or more AI/ML components that include a court transcript component that is trained with a plurality of audio recordings and corresponding certified legally-formatted training transcripts.

2. The ASR system of claim 1, wherein the court transcript component includes: (i) one or more parameters that are adjustable based on comparing the legally-formatted transcript outputted with the certified legally-formatted training transcript that originates from corresponding audio data; and/or (ii) a plurality of transcription handling rules that are applied by the court transcript component based on a context detected in the audio data.

3. The ASR system of claim 1, wherein the contextual transcription engine is configured to: (i) establish a default context and one or more exception contexts, and wherein the contextual transcription engine is to apply one or more default formatting rules responsive to detection of the default context to generate the legally-formatted transcript; and/or (ii) apply one ormore exception formatting rules responsive to detection of an exception context to generate the legally-formatted transcript.

4. The ASR system of claim 3, wherein the exception context comprises one or more of: (i) detection of a witness being sworn in in the audio data, and responsive to detection of the witness being sworn in, applying one or more Q/A formatting rules to generate the legally-formatted transcript; and/or (ii) detection of an objection being raised in the audio data, and responsive to detection of the objecting being raised, applying one or more colloquy formatting rules to generate the legally-formatted transcript.

5. The ASR system of claim 1, wherein the audio processing engine includes one or more AI/ML components configured to detect audio segments of multiple speakers in the audio data.

6. The ASR system of claim 5, wherein the one or more AI/ML components configured to detect audio segments of multiple speakers include identifying one or more of the multiple speakers in the audio data by name based on one or more of: (i) a portion of the audio data; (ii) on an existing audio recording of one or more of the multiple speakers; or (iii) a voice imprint capture of one or more of the multiple speakers.

7. The ASR system of claim 1, wherein the audio processing engine is configured to identify one or more of the multiple speakers by name and assigns a speaker identifier to at least one of the multiple speakers.

8. The ASR system of claim 7, wherein the contextual transcription engine is configured to insert a speaker name into the legally-formatted transcript with corresponding spoken words of the speaker identified by the audio processing engine.

9. A computer-implemented method comprising:
determining audio segmentation corresponding with multiple identified speakers of audio data; and
generating a text file based on the audio data in a legally-formatted transcript using one or more AI/ML components that include a court transcript component that is trained with a plurality of audio recordings and corresponding certified legally-formatted training transcripts.

10. The method of claim 9, wherein the court transcript component includes: (i) one or more parameters that are adjustable based on comparing the legally-formatted transcript outputted with the certified legally-formatted training transcript that originates from corresponding audio data; and/or (ii) a plurality of transcription handling rules that are applied by the court transcript component based on a context detected in the audio data.

11. The method of claim 9, further comprising: (i) establishing a default context and one or more exception contexts and applying one or more default formatting rules responsive to detection of the default context to generate the legally-formatted transcript; and/or (ii) applying one or more exception formatting rules responsive to detection of an exception context to generate the legally-formatted transcript.

12. The method of claim 11, wherein the exception context comprises: (i) detecting a witness being sworn in in the audio data, and responsive to detecting the witness being sworn in, applying one or more Q/A formatting rules to generate the legally-formatted transcript; and/or (ii) detecting an objection being raised in the audio data, and responsive to detecting the objecting being raised, applying one or more colloquy formatting rules to generate the legally-formatted transcript.

13. The method of claim 9, wherein the one or more AI/ML components to detect audio segments of multiple speakers include identifying one or more of the multiple speakers in the audio data by name based on one or more of: (i) a portion of the audio data; (ii) on an existing audio recording of one or more of the multiple speakers; or (iii) a voice imprint capture of one or more of the multiple speakers.

14. The method of claim 9, further comprising identifying one or more of the multiple speakers by name and assigns a speaker identifier to at least one of the multiple speakers and inserting a speaker name into the legally-formatted transcript with corresponding spoken wordsof the speaker identified by the audio processing engine.

15. One or more machine-readable storage media comprising a plurality of instructions stored thereon that, when executed, cause a compute device to perform the method of any of claims 9-14.
